# EUROPEAN PATENT SPECIFICATION

(11) **EP 2 202 437 B1**
(45) Date of publication and mention of the grant of the patent: **09.11.2011**
(21) Application number: 10160197.9
(22) Date of filing: 21.03.2007
(51) Int. Cl.: F16L 15/04, F16L 58/18

(54) **Pipe coupling assembly and protective ring therefor**
Rohrkupplungsanordnung und ein Schutzring dafür
Ensemble raccord de tuyaux et anneau de protection pour celui-ci

(30) Priority: 27.09.2006 US 528702; 29.09.2006 US 540939
(43) Date of publication of application: 30.06.2010
(62) Divisional of application: 07733561.0
(73) Proprietor: National Oilwell Varco, L.P., Houston, TX 77036 (US)
(72) Inventor: McLaughlin, Thomas, Kilpatrick, Balmedie,, Aberdeenshire AB23 8TW (GB)
(74) Representative: Lucas, Phillip Brian

(56) References cited:
- WO-A1-94/11664
- GB-A- 2 032 033
- US-A- 2 487 241
- US-A- 2 805 872

## Description

The present invention relates to a protective ring or gasket for use in a coupling assembly, to a coupling assembly comprising the protective ring, and to a method of coupling tubulars together using the coupling assembly.

Many tubulars are used to convey corrosive or erosive materials. Many piping systems and pipelines transport fluids that are highly corrosive to the carbon steel used in the pipe. In the drilling for and the production and injection of oil and gas, corrosion resistant alloy pipe, e.g., casing or tubing, is now used in the drilling of oil and gas wells into zones that produce highly corrosive fluids. To overcome corrosion problems, and as well known to those skilled in the art, it is common to use lined steel pipe, with liners made of plastic, stainless steel, or other corrosion resistant materials.

Certain typical multiple walled pipe, e.g. a lined steel pipe, is a dual or double walled pipe in which the inner wall is a liner tube made of a corrosion resistant material that serves as a conductor for the corrosive fluid, and an outer wall or pipe that is designed to provide strength to withstand the internal pressures of the corrosive fluid, as well as external forces such as external pressure, mechanical loading, etc. In certain tubulars, there are limitations on the length of such double walled pipes due to conditions to which the pipes are subjected on site. Thus, in the case of tubing or casing strings and in the production of oil and gas, each joint of pipe is usually about 7.32-13.41m (24-44 feet) long while the tubing or casing string itself may be thousands of feet long. Accordingly, and as is well known in making up such tubing or casing string, successive joints of tubing/casing are connected together using a coupling (or coupling assembly) until the desired length of string is achieved. Similarly in pipelines successive pieces of pipe are joined by couplings.

Typically, the coupling comprises an annular body for placement between and to which two tubulars may be connected. The annular body has a thread on its interior surface for receiving the thread on the end of the each of the tubulars. An annular gasket is positioned substantially centrally within and co-axial with the annular body. In use, each tubular comes into abutment with one side of the annular gasket as it is screwed into the annular body. An example of such a coupling assembly is shown in US-A-5 470 111.

It is desirable, where successive joints of the lined or clad pipe are joined to one another by means of a coupling that the interior of the coupling is protected from corrosion.

US-A-2,805,872 Routh, discloses a generic protective ring in form of a gasket for sealing between pin ends of adjacent cement lined pipes screwed into a continuously threaded collar and to protect the continuously threaded collar from corrosive action of fluid flowing through the cement lined pipe. The gasket is designed to inhibit collapse when there is a low pressure in the pipe. The gasket comprises reinforcing rings surrounded by a resilient portion such as rubber. The gasket has a concave inner surface. The volume of the concavity approaches the volume of by which the gasket will compress such that the concave inner surface becomes flush with an internal face of the cement lined pipe. The reinforcing rings are provided to resist collapse during periods of low pressure in the pipe.

According to the invention there is provided A protective ring for use in a coupling assembly, the coupling assembly comprising a coupling body of generally cylindrical shape with a channel therethrough, each end of the coupling body having a thread for threaded mating with a tubular so that the coupling assembly may provide a connection between two tubulars, the protective ring comprising a ring body for positioning adjacent an interior wall of the coupling body between the two ends thereof and located for contact by the two tubulars, the ring body being generally cylindrical and having a ring channel therethrough,

the protective ring comprising a plurality of energizing members, each energizing member of the plurality of energizing members comprising a material having a hardness, and **characterised in that** the hardness of at least one energizing member is less than the hardness of at least one other energizing member, the arrangement being such that, in use, upon compression of the protective ring between the two tubulars the energizing member urges the ring body against the interior wall of the coupling body whereby corrosive material conveyed by the tubulars is inhibited from contact with the coupling body.

Preferable and advantageous features are set out below.

Preferably, at least one of the energizing members extends around the ring body and is substantially coaxial therewith, whereby the ring body is inhibited from bowing inwardly during compression between the two tubulars.

Advantageously, the protective ring further comprises an opening in the ring body, the arrangement being such that, in use, under compression between the two tubulars, the opening begins to close facilitating a change in shape of the ring body substantially without a change in volume thereof. Preferably, the at least one opening is of sufficient size that, in use, under compression between the two tubulars the ring body is inhibited from significant expansion into a flow path defined by the coupling assembly and the two tubulars. Advantageously, the opening is associated with the at least one of the energizing members. Preferably, the protective ring further comprises a plurality of openings, each opening corresponding to a respective energizing member. Advantageously, at least one of the plurality of openings is on an exterior of the ring body and at least one of the plurality of openings is on an interior of the ring body. Preferably, the opening is sized for accommodating manufacturing length tolerances of the two tubulars when the protective ring is compressed therebetween.

Advantageously, the plurality of energizing members comprises, two energizing members of the same hardness and one energizing member of a material harder than the material of the two energizing members.

Preferably, the at least one energizing member comprises a resilient elastomeric material.

Preferably, the ring body comprises a compressible anti-corrosive material.

Advantageously, the protective ring comprises at least one concave area extending around at least a part of the circumference of the ring body.

The present invention also provides a coupling assembly for a coupling together two tubulars, which coupling assembly comprises
a coupling body of generally cylindrical shape with a channel therethrough, each end of the coupling body having a thread for threaded mating with a tubular so that the coupling assembly may provide a connection between two tubulars, and a protective ring of the present invention.

Preferably, the two tubulars each have a tapered portion, the coupling body adapted for receiving the tapered portions.

The present invention also provides a method of coupling together two tubulars using a coupling assembly of the present invention, which method comprises the steps of:
(1) threadedly engaging each tubular (132,134) to the coupling body (120) of the coupling assembly; and
(2) compressing the protective ring between the two tubulars (132,134) such that the protective ring is urged against an interior wall (126) of the coupling body (120), wherein the at least one energizing member of lesser hardness (142a,142c) begins to change shape under compression before the at least one other energizing member (142b).

Any protective ring according to the present invention may have one, two, three, four, five or more concave areas on the protective ring, on the protective ring's exterior and/or on the protective ring's interior to enhance directed controlled energizing of the protective ring into contact with a coupling member. In one particular aspect, such a protective ring has three concave portions on the protective ring's exterior and two concave portions on the protective ring's interior. Optionally, such a protective ring (with one - five or more concave areas) may have one - five or more energizing members. In certain aspects, in a protective ring with two (or more) spaced-apart concave areas on a side of a protective ring, an energizing member is located between two concave areas.

For a better understanding of the present invention reference will now be made, by way of example only, to the accompanying drawings, in which:
Fig. 1A is a side cross-section view of a known coupling assembly in use with two tubulars;
Figs. 1B and 1C are plan views of the two components of the coupling assembly of Fig. 1A, shown separately for clarity;
Fig. 2A is a side cross-section view of a first embodiment of a coupling assembly according to the present invention in use with two tubulars;
Fig. 2B is a side cross-section view of a coupling body part of the assembly of Fig. 2A;
Fig. 2C is a side cross-section view of a protective ring part of the assembly of Fig. 2A;
Fig. 2D is a side cross-section view of two tubulars prior to coupling with a coupling assembly according to the present invention;
Fig. 2E is a cross-section view of various energizing members according to the present invention;
Fig. 3A is a side cross-section view of part of a first embodiment of a protective ring according to the present invention;
Fig. 3B is a partial side view in cross-section of the protective ring of Fig. 3A in use with a coupling body forming a coupling assembly;
Figs. 3C to 3E show the coupling assembly of Fig. 3B in different stages of compression;
Fig. 4A is a side cross-section view of part of a second embodiment of a protective ring according to the present invention;
Fig. 4B is a side cross-section view of part of another protective ring;
Fig. 4C is a side cross-section view of part of another protective ring;
Fig. 4D is a side cross-section view of part of another protective ring;
Fig. 4E is a side cross-section view of part of another protective ring;
Fig. 5A is a side cross-section view of part of another protective ring;
Fig. 5B is a side cross-section view of part of another protective ring;
Fig. 5C is a side cross-section view of part of another protective ring;
Fig. 5D is a side cross-section view of part of another protective ring;
Fig. 6A is a top cross-section view of another protective ring ;
Fig. 6B is a side view of the protective ring of Fig. 6A;
Fig. 6C is a top cross-section view of another protective ring.

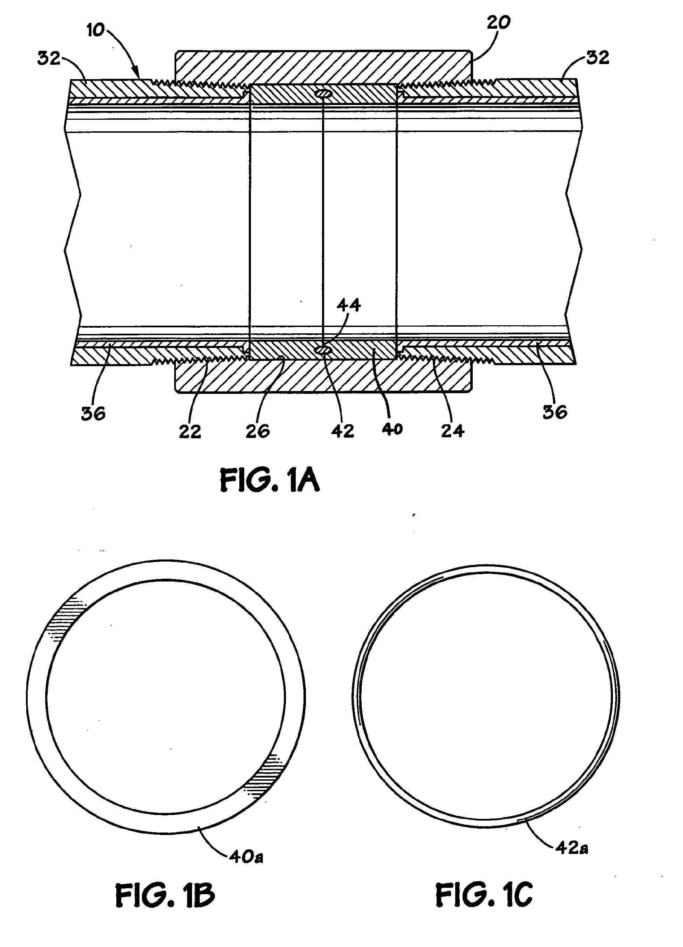

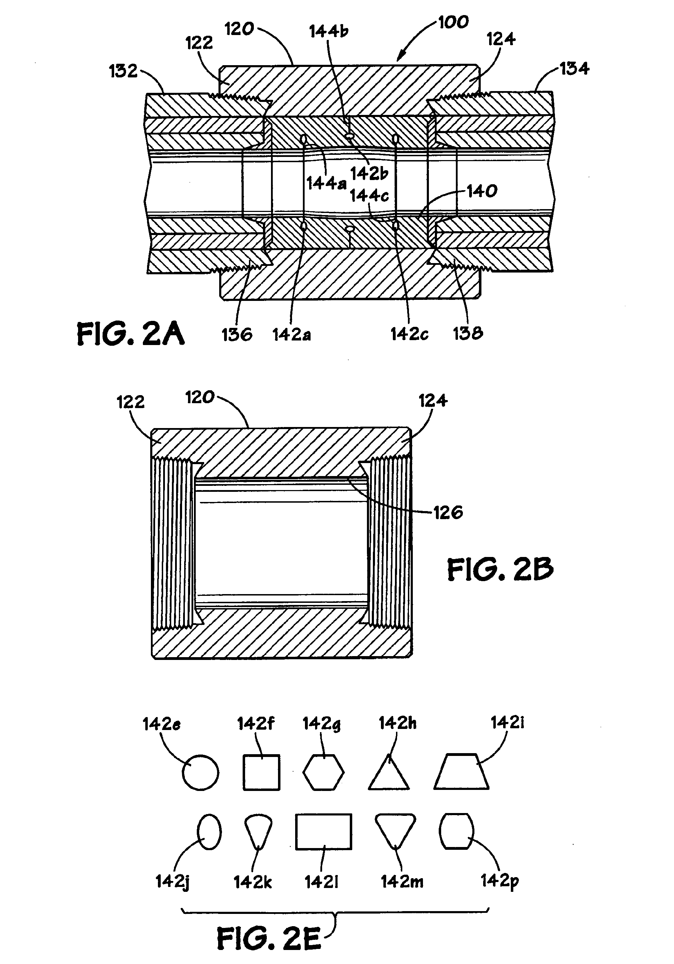

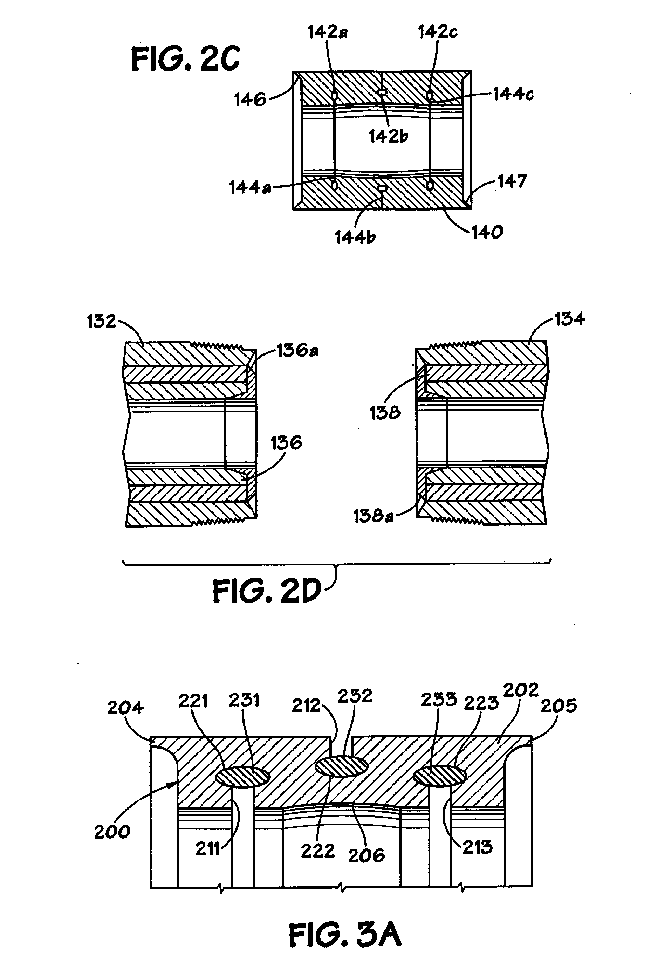

As shown in Fig. 1A, a coupling assembly 10 having a coupling member 20 which is a generally cylindrical hollow member with interiorly threaded spaced-apart ends 22, 24 and an interior wall 26. Two tubulars 32, 34 are threadedly connected to respective ends 22, 24 of the coupling member. Between ends of the two tubulars 32, 34 and adjacent the interior wall 26 of the coupling member 20 is a protective ring 40 (shown schematically). Optionally the tubulars 32, 34 have a liner 36 which may be any known tubular liner. Optionally, the protective ring 40 has one, two, three, four, five or more (one shown) energizing member 42. Optionally, a recess, slit, or opening 44 (or recesses or openings) (all referred to as "openings") leads from an exterior of the protective ring 40 to the energizing member(s) 42 which allow movement (e.g. axial movement of the protective ring) when compressive forces are applied to the protective ring without a change in volume of the protective ring but with controlled change in shape of the protective ring. Fig. 1B is a top (or bottom) view of one embodiments 40a of a protective ring 40. Fig. 1C is a top (or bottom) view of one embodiment 42a of a protective ring 42. The protective rings and energizing members of Figs. 2A, 2E and 3A are, similarly, items which are generally circular.

As shown in Figs. 2A-2D, a coupling assembly 100 according to the present invention has a protective ring 140 according to the present invention held in compression between the pin ends 136, 138 of the pipes 132, 134. Each pin end 136, 138 is threadedly secured in a respective end 122, 124 of a coupling member 120. The protective ring 140 has three spaced-apart openings 144a, 144b, and 144c, each of which extends interiorly from an exterior of the protective ring 140 and extends to an interior space which contains an energizing member 142a, 142b, 142c, respectively. Any energizing member in any embodiment of the present invention may have any suitable cross-section shape, including but not limited to, those shown in Fig. 2E (shapes as follows: 142e, circular; 142f, square; 142g, hexagonal; 142h, triangular; 142i, trapezoidal; 142j, oval; 142k, teardrop; 1421, rectangular; 142m, teardrop; 142p, barrel).

Each pin end 136, 138 has an outer end bevel or taper 136a, 138a, respectively. Edge portions 146, 147 of the protective ring 140 are squeezed between an interior wall 126 of the coupling member 120 and the bevelled pin ends, thus assisting in securing the protective ring 140 in place adjacent the interior wall 126 of the coupling member 120.

As shown in Fig. 2A, the two energizing members 142a, 142c are of the same hardness and the energizing member 142b is of a material harder than the material of the energizing members 142a, 142c. In one particular aspect, the energizing members 142a, 142c are made of a resilient elastomeric material, e.g., but not limited to, nitrile or butile; in certain aspects the members 142a, 142c with a hardness of about 70 durometer and the member 142b with a hardness of about 90 durometer. Any protective ring according to the present invention may have energizing members located further interiorly than other energizing members and of a hardness less than the other energizing members (e.g. other energizing members at an exterior wall of a protective ring).

In the coupling assembly 100, the protective ring 140 extends around the entire inner circumference of the coupling member 120 and the energizing members 142a, 142b, and 142c (and their corresponding openings 144a, 144b, 144c) extend around (and within) the entire circumference of the protective ring 140.

Fig. 3A shows a protective ring 200 according to the present invention (e.g. usable in the coupling assemblies of Figs. 1A and 2A). In certain particular aspects a body 202 of the protective ring 200 is made of compressible anti-corrosive material, e.g. elastomeric resilient material, polytetrafluoroethylene ("PTFE"), or a combination of elastomer and PTFE. Initially three openings 211, 212, and 213 extend from an exterior of the protective ring 200 to interior spaces 221, 222, 223, respectively, within the protective ring 200. Energizing members 231, 232, 233 are located within the interior spaces 221, 222, 223, respectively.

Optionally, the protective ring 200 has outer edges or "teeth" 204, 205.

The openings 211, 212, 213, the spaces 221, 222, 223 and the energizing members 231, 232, 233 extend around the entire generally cylindrical body 202 (which is like the protective rings 40 and 140 in general hollow cylindrical shape although only part of the protective ring 200 is shown in Fig. 3A). Optionally, the body 202 has a circumferential indentation 206 or concave area therearound.

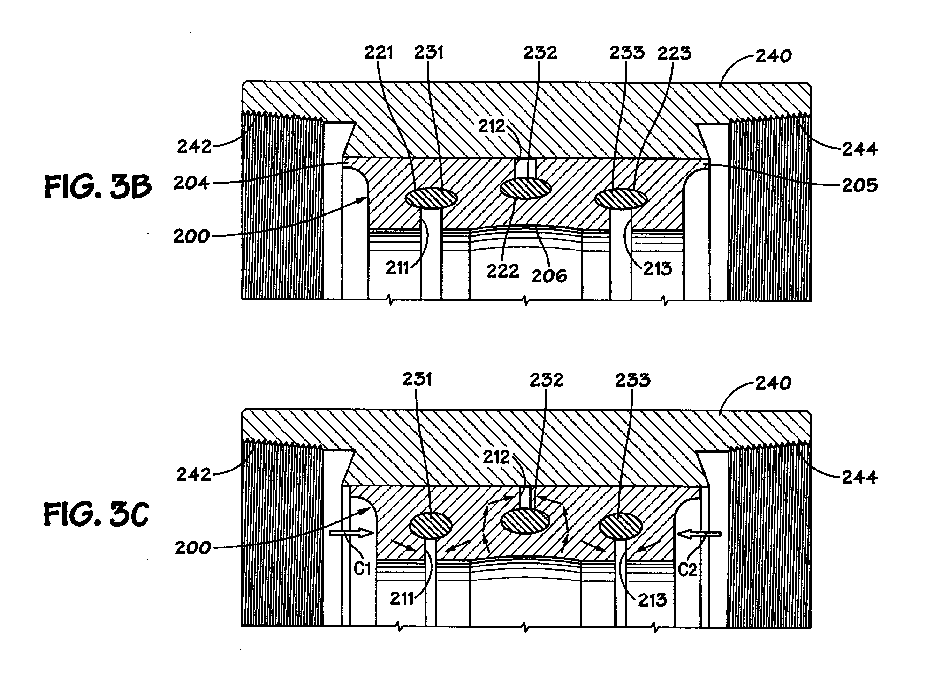

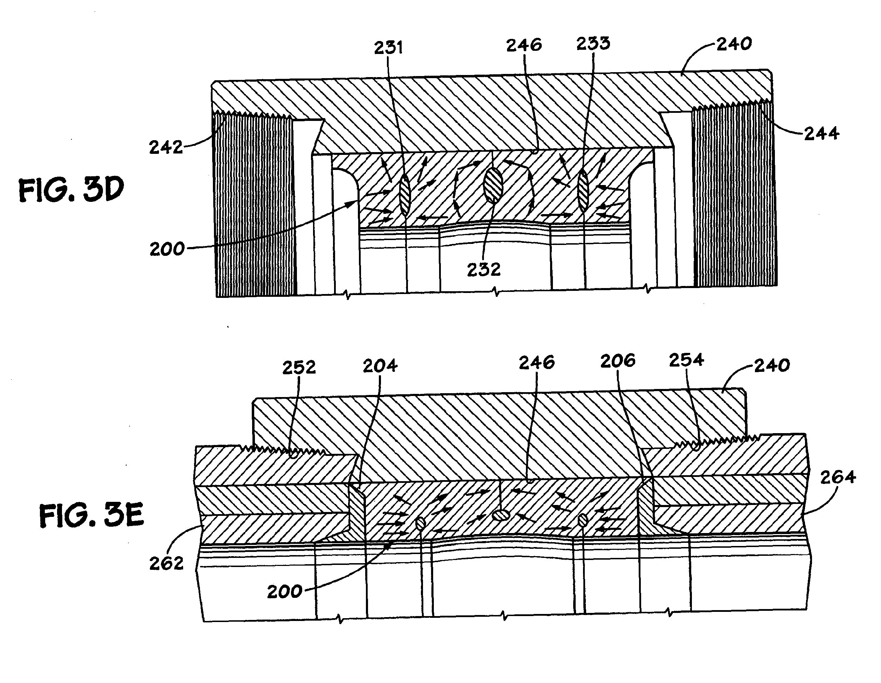

As shown in Fig. 3B, the protective ring 200 is positioned adjacent and installed inside a coupling member 240 (shown partially - shaped generally cylindrically as the coupling members 20 and 120 described above) having internally threaded ends 242, 244 for threadedly mating with externally threaded ends (e.g. the ends 252, 254 of pipes 262, 264, Fig. 3E).

As shown in Fig. 3C the protective ring 200 is being compressed (indicated by arrows C1, C2), e.g. by pin ends of two tubulars to be connected together by the coupling 240. Since energizing members 231 and 233 are not as hard as the energizing member 232, the energizing members 231 and 233 move under compression before the energizing member 232, thus the protective ring 200 begins to move outwardly (toward the coupling member 240 as shown in Fig. 3C). The openings 211 and 213 begin to restrict and close. Then the opening 212 begins to restrict and close. The openings 211 - 213 provide space so that the protective ring 200 does not significantly expand into the flow path of the coupling member 240. The indentation 206 also facilitates the outward movement (toward the coupling member interior wall) of the protective ring 200 and provides an area or a void for protective ring material to flow to when the protective ring is compressing.

Fig. 3D illustrates the protective ring 200 fully compressed with the openings 211 - 213 closed and the energizing members 231 - 233 compressed (the members 231 - 233 have changed shape). The protective ring 200 has been forced against an interior wall 246 of the coupling member and, due to the openings 211 - 213, the indentation 206, and/or the entrapment of the two teeth 204, 205, the protective ring 200 has been biased outwardly and prevented from bowing inwardly so that the protective ring 200 is pressed up against the interior wall 246 along the length of the protective ring 200. The energizing members 231 - 233 are pushing the protective ring 200 against the coupling's interior wall.

As shown in Fig. 3E, the edges or teeth 204, 205 of the protective ring 200 have been trapped between tapered ends of the tubulars 262, 264 and part of the interior wall 246 of the coupling member 240, thus facilitating maintenance of the protective ring 200 in position to protect the interior wall 246.

with no adhesive or material between the interior wall 246 and the protective ring 200, and with the edges 204, 205 entrapped as described, either: corrosive fluid and/or material does not come into contact with the wall 246; or once such fluid and/or material does move between the wall 246 and the exterior of the protective ring 200 it is held there and its escape therefrom is inhibited or prevented. Thus, the wall 246 is exposed only to that amount of the material (and, in certain aspects only to the amount of oxygen in that amount of material) so that other corrosive material is inhibited or prevented from flowing into that space to corrode the wall 246 and so that a continuous flow of corrosive material is inhibited or prevented.

In certain aspects oil country tubular goods are made according to certain length tolerances, e.g. one-eighth inch plus or minus. By approximately sizing the openings (e.g. the openings 211 - 213) of a protective ring according to the present invention, this manufacturing tolerance can be accommodated. For example, for tubulars with a one-eighth inch manufacturing tolerance, if each opening (e.g. 211 - 213) is 0.66 inches for a total of about 0.200 inches (actually 0.198 inches) and the energizing members themselves (e.g. members 231 - 233) can be squeezed a total of another 0.050 inches, a total of about 0.250 inches of compression is available, i.e., an amount equal to about the manufactuprotective ring tolerance of one-eighth inch plus or minus (a total of one-fourth inch).

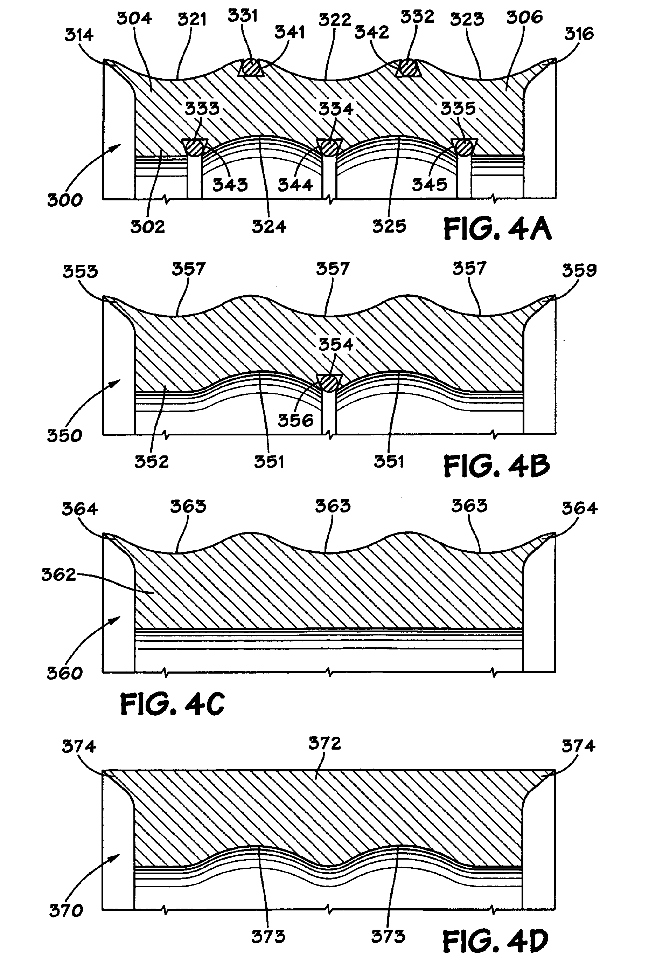

Fig. 4A shows a protective ring 300 according to the present invention useful in protecting a coupling member (e.g. a coupling member as in Figs. 1A, 2A, 3B or 3E). The protective ring 300 (only half is shown) has a body 302 with a first end 304 and a second end 306. Each end, optionally, has a projecting edge or tooth 314, 316, respectively which extends around the entire circumference of its respective circular end. A plurality of concave areas extend around the protective ring's circumference areas 321, 322, 323 on the protective ring's exterior surface and areas 324, 325 on the protective ring's interior surface. Two energizing members 331, 332 or held in corresponding recess 341, 342 on the protective ring's exterior surface and three energizing members 333, 334, 335 are held in corresponding recesses 343, 344, 345 on the protective ring's interior surface.

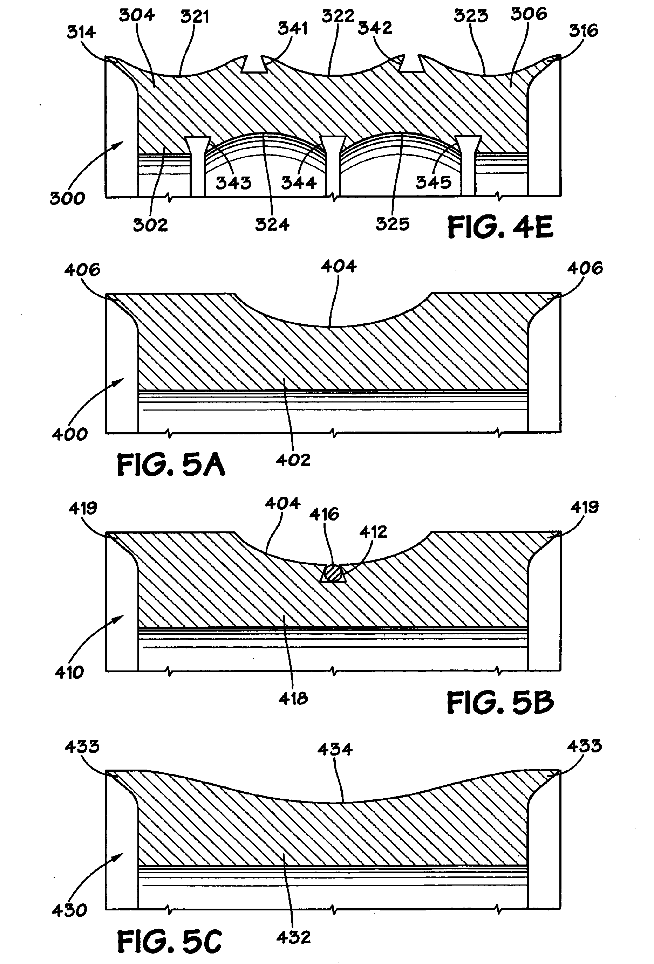

As shown in Fig. 4E, the energizing members are, in another ring, omitted. Any one, some, or all of the recesses 341 - 345 may be omitted.

The edges or teeth 314, 316 can be trapped as described above for the edges 204, 205.

As shown in Fig. 4A, each energizing member 343, 344, 345 can be located opposite a concave area 321, 322, 323 (along with other forces) respectively, and, upon energizing force the concave areas outwardly.

Figures 4A to 6C show other protective rings, which do not fall under the scope of the present invention. Fig. 4B illustrates a protective ring 350, like the protective ring 300, but with only one energizing member 354 on an interior surface of a protective ring body 352. The energizing member 354 is in a recess 356 which is positioned between two concave areas 351. These concave areas 351 are on the body's exterior surface and the body 352 has two end edges or teeth 353, 359.

Fig. 4C shows a protective ring 360, like the protective ring 350, but without the concave areas 351. A body 362 has three concave areas 363 on the body's exterior surface. Optionally, there are end edges 364 at ends of the body 362. Optionally, any energizing member or members disclosed herein can be added to the protective ring 360.

Fig. 4D shows a protective ring 370, like the protective ring 350, but without energizing members. A body 372 has two concave areas 373 on the body's interior surface. Optionally, ends of the body 362 have edges 374. Optionally, any energizing member or members disclosed herein can be added to the protective ring 370.

Fig. 5A shows a protective ring 400 which is a generally cylindrical hollow member (only half shown). The protective ring 400 has a body 402 with a concave area 404 on its exterior surface. As with all the concave areas referred to above, the concave area 404 extends around the body of the protective ring. Optionally, as is true of any protective ring, the concave area(s) may be intermittent, a single pocket, or a series of spaced-apart distinct pockets. Ends of the body 402, optionally, have edges 406.

Fig. 5B shows a protective ring 410 which is like the protective ring 410 but which includes a recess 412 with an energizing member 416 therein. The protective ring 410 has a body 418 with a concave area 415 and with optional end edges 419.

Fig. 5C shows a protective ring 430 with a body 432 having optional end edges 433. A concave area 434 is on the body's exterior surface.

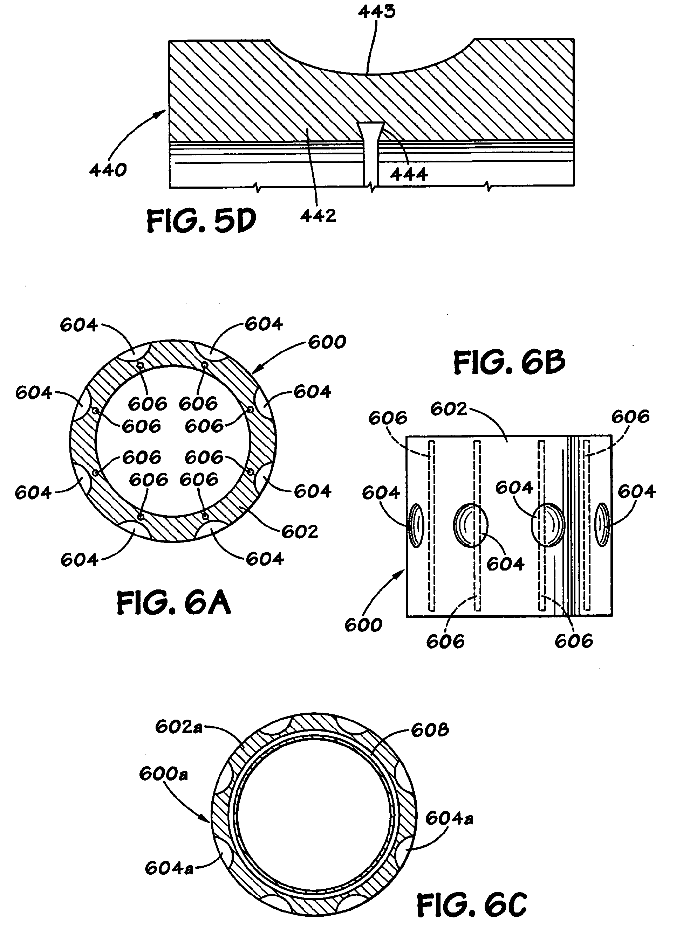

Fig. 5D shows a protective ring 440 with a body 442. The body 442 has a concave area 443 on its exterior and a recess 444 on its interior.

In any ring with intermittent concave areas, pocket, or pockets, if an energizing member is used, the energizing member may extend only so far as the area or pocket(s) or it may still extend uninterrupted around the protective ring's circumference.

Fig. 6A illustrates a protective ring 600 with a plurality of spaced-apart concave areas 604 in a body 602. Optionally energizing members 606 are adjacent each pocket. Alternatively, as shown in Fig. 6C, in a protective ring 600a, like the protective ring 600, an energizing member 608 can extend adjacent all pockets 604a in a body 602a.

The protective ring and coupling assembly of the present invention may find application in various fields including, but not limited to, coupling any clad or lined tubulars including oil and gas well tubing and casing, piping in chemical and other plants, oil and gas pipelines, etc.

## Claims

1. A protective ring for use in a coupling assembly, the coupling assembly comprising a coupling body (120) of generally cylindrical shape with a channel therethrough, each end of said coupling body (120) having a thread for threaded mating with a tubular (132,134) so that the coupling assembly may provide a connection between two tubulars (132,134), the protective ring comprising a ring body (140) for positioning adjacent an interior wall (126) of said coupling body (120) between the two ends thereof and located for contact by said two tubulars (132,134), said ring body (140) being generally cylindrical and having a ring channel therethrough,
said protective ring comprising a plurality of energizing members (142a,142b,142c), each energizing member of the plurality of energizing members (142a,142b,142c) comprising a material having a hardness, **characterised in that** the hardness of at least one energizing member (142a,144c) is less than the hardness of at least one other energizing member (142b), the arrangement being such that, in use, upon compression of said protective ring between said two tubulars said energizing member urges said ring body (140) against said interior wall (126) of said coupling body (120) whereby corrosive material conveyed by the tubulars (132,134) is inhibited from contact with said coupling body (120).

2. A protective ring as claimed in claim 1, wherein at least one of said energizing members (142a,142b,142c) extends around said ring body (140) and is substantially co-axial therewith, whereby said ring body (140) is inhibited from bowing inwardly during compression between said two tubulars (132,134).

3. A protective ring as claimed in Claim 1 or 2, further comprising an opening (144a,144b,144c) in said ring body (140), the arrangement being such that, in use, under compression between said two tubulars (132,134), said opening (144a,144b,144c) begins to close facilitating a change in shape of said ring body (140) substantially without a change in volume thereof.

4. A protective ring as claimed in claim 3, wherein said at least one opening (144a,144b,144c) is of sufficient size that, in use, under compression between said two tubulars (132,134) said ring body (140) is inhibited from significant expansion into a flow path defined by said coupling assembly and said two tubulars.

5. A protective ring as claimed in claim 2 or 3, wherein said opening (144a,144b,144c) is associated with said at least one of said energizing members( 142a,142b,142c).

6. A protective ring as claimed in claim 2, 3, 4 or 5, further comprising a plurality of openings (144a,144b,144c), each opening corresponding to a respective energizing member (142a,142b,142c).

7. A protective ring as claimed in claim 6, wherein at least one of said plurality of openings (144a,144b,144c) is on an exterior of said ring body (140) and at least one of said plurality of openings (144a,144b,144c) is on an interior of said ring body (140).

8. A protective ring as claimed in any of claims 2 to 7, wherein said opening (144a,144b,144c) is sized for accommodating manufacturing length tolerances of said two tubulars (132,134) when said protective ring is compressed therebetween.

9. A protective ring as claimed in any preceding claim, wherein the plurality of energizing members (142a,142b,142c) comprises, two energizing members (142a, 142c) of the same hardness and one energizing member (142b) of a material harder than the material of the two energizing members (142a, 142c).

10. A protective ring as claimed in any preceding claim, wherein the at least one energizing member (142a,142b,142c) comprises a resilient elastomeric material.

11. A protective ring as claimed in any preceding claim, wherein said ring body (140) comprises a compressible anti-corrosive material.

12. A protective ring as claimed in any preceding claim, wherein the protective ring comprises at least one concave area (206,321-325,604) extending around at least a part of the circumference of said ring body.

13. A coupling assembly for a coupling together two tubulars, which coupling assembly comprises
a coupling body (120) of generally cylindrical shape with a channel therethrough, each end of said coupling body (120) having a thread (254) for threaded mating with a tubular (132,134) so that the coupling assembly may provide a connection between two tubulars (132,134), and a protective ring as claimed in any of claims 1 to 12.

14. A coupling assembly as claimed in Claim 13, wherein the two tubulars (132,134) each have a tapered portion, the coupling body (120) adapted for receiving the tapered portions.

15. A method of coupling together two tubulars using a coupling assembly as claimed in claim 13 or 14, which method comprises the steps of:
(1) threadedly engaging each tubular (132,134) to the coupling body (120) of the coupling assembly; and
(2) compressing the protective ring between said two tubulars (132,134) such that said protective ring is urged against an interior wall (126) of the coupling body (120), wherein said at least one energizing member of lesser hardness (142a,142c) begins to change shape under compression before said at least one other energizing member (142b).

## Patentansprüche

1. Schutzring für die Verwendung in einer Kopplungsanordnung, wobei die Kopplungsanordnung einen Kopplungskörper (120) mit einer im Allgemeinen zylindrischen Form und einem hindurch verlaufenden Kanal umfasst, wobei jedes Ende des Kopplungskörpers (120) ein Gewinde für eine Verschraubung mit einem Rohr (132, 134) besitzt, so dass die Kopplungsanordnung eine Verbindung zwischen zwei Rohren (132, 134) schaffen kann, wobei der Schutzring einen Ringkörper (140) umfasst, um in der Nähe einer Innenwand (126) des Koppiungskörpers (120) zwischen den zwei Enden hiervon positioniert zu werden und in einem Kontakt mit den zwei Rohren (132, 134) angeordnet zu werden, wobei der Ringkörper (140) im Allgemeinen zylindrisch ist und einen hindurch verlaufenden Ringkanal besitzt,
wobei der Schutzring mehrere Erregungselemente (142a, 142b, 142c) besitzt, wobei jedes Erregungselement der mehreren Erregungselemente (142a, 142b, 142c) ein Material mit einer Härte besitzt, **dadurch gekennzeichnet, dass** die Härte wenigstens eines Erregungselements (142a, 144c) geringer ist als die Härte wenigstens eines anderen Erregungselements (142b), wobei die Anordnung derart ist, dass sie im Gebrauch bei einer Kompression des Schutzrings zwischen den zwei Rohren das Erregungselement den Ringkörper (140) gegen die Innenwand (126) des Kopplungskörpers (120) drängt, wodurch verhindert wird, dass korrosives Material, das durch die Rohre (132, 134) befördert wird, mit dem Kopplungskörper (120) in Kontakt gelangt.

2. Schutzring nach Anspruch 1, wobei sich wenigstens eines der Erregungseleinente (142a, 142b, 142c) um den Ringkörper (140) erstreckt und hierzu im Wesentlichen koaxial ist, wodurch verhindert wird, dass sich der Ringkörper (140) während der Kompression zwischen den zwei Rohren (132, 134) nach innen biegt.

3. Schutzring nach Anspruch 1 oder 2, der ferner eine Öffnung (144a, 144b, 144c) in dem Ringkörper (140) aufweist, wobei die Anordnung derart ist, dass im Gebrauch bei einer Kompression zwischen den zwei Rohren (132, 134) die Öffnung (144a, 144b, 144c) beginnt, dicht zu schließen, wodurch eine Änderung der Form des Ringkörper (140) im Wesentlichen ohne Änderung seines Volumens erleichtert wird.

4. Schutzring nach Anspruch 3, wobei die wenigstens eine Öffnung (144a, 144b, 144c) eine ausreichende Größe besitzt, damit im Gebrauch bei einer Kompression zwischen den zwei Rohren (132, 134) verhindert wird, dass sich der Ringkörper (140) in einen Strömungsweg, der durch die Kopplungsanordnung und die zwei Rohre definiert ist, erheblich ausdehnt.

5. Schutzring nach Anspruch 2 oder 3, wobei die Öffnung (144a, 144b, 144c) dem wenigstens einen Erregungselement (142a, 142b, 142c) zugeordnet ist.

6. Schutzring nach Anspruch 2, 3, 4 oder 5, der ferner mehrere Öffnungen (144a, 144b, 144c) umfasst, wobei jede Öffnung einem entsprechenden Erregungselement (142a, 142b, 142c) entspricht.

7. Schutzring nach Anspruch 6, wobei sich wenigstens eine der mehreren Öffnungen (144a, 144b, 144c) an einer Außenseite des Ringkörper (140) befindet und wenigstens eine der mehreren Öffnungen (144a, 144b, 144c) sich an einer Innenseite des Ringkörper (140) befindet.

8. Schutzring nach einem der Ansprüche 2 bis 7, wobei die Öffnung (144a, 144b, 144c) so bemessen ist, dass Fertigungslängentoleranzen der zwei Rohre (132, 134) berücksichtigt werden, wenn der Schutzring dazwischen komprimiert wird.

9. Schutzring nach einem vorhergehenden Anspruch, wobei die mehreren Erregungselewente (142a, 142b, 142c) zwei Erregungselemente (142a, 142c) mit der gleichen Härte und ein Erregungselement (142b) aus einem Material, das härter als das Material der zwei Erregungselemente (142a, 142c) ist, umfassen.

10. Schutzring nach einem vorhergehenden Anspruch, wobei das wenigstens eine Erregungselement (142a, 142b, 142c) ein nachgiebiges Elastomermaterial umfasst.

11. Schutzring nach einem vorhergehenden Anspruch, wobei der Ringkörper (140) ein komprimierbares Antikorrosionsmaterial umfasst.

12. Schutzring nach einem vorhergehenden Anspruch, wobei der Schutzring wenigstens einen konkaven Bereich (206, 321-325, 604) umfasst, der sich wenigstens um einen Teil des Umfangs des Ringkörpers erstreckt.

13. Kopplungsanordnung für eine Kopplung zusammen mit zwei Rohren, wobei die Kopplungsanordnung umfasst:
einen Kopplungskörper (120) mit einer im Allgemeinen zylindrischen Form und einem hindurch verlaufenden Kanal, wobei jedes Ende des Kopplungskörpers (120) ein Gewinde (254) besitzt, um mit einem Rohr (132, 134) verschraubt zu werden, so dass die Kopplungsanordnung eine Verbindung zwischen zwei Rohren (132, 134) schaffen kann, und
einen Schutzring nach einem der Ansprüche 1 bis 12.

14. Kopplungsanordnung nach Anspruch 13, wobei die zwei Rohre (132, 134) jeweils einen konischen Abschnitt besitzen, wobei der Kopplungskörper (120) dazu ausgelegt ist, die konischen Abschnitte aufzunehmen.

15. Verfahren zum Koppeln von zwei Rohren miteinander unter Verwendung einer Kopplungsanordnung nach Anspruch 13 oder 14, wobei das Verfahren die folgenden Schritte umfasst:
(1) Herstellen eines Gewindeeingriffs zwischen jedem Rohr (132, 134) und dem Kopplungskörper (120) der Kopplungsanordnung; und
(2) Komprimieren des Schutzrings zwischen den zwei Rohren (132, 134), so dass der Schutzring gegen eine Innenwand (126) des Kopptungskörpers (120) gedrängt wird, wobei das wenigstens eine Erregungselement mit geringerer Härte (142a, 142c) vor dem wenigstens einen anderen Erregungselement (142b) beginnt, seine Form unter der Kompression zu ändern.

## Revendications

1. Anneau de protection à utiliser dans un ensemble de raccordement, l'ensemble de raccordement comprenant un corps de raccordement (120) de configuration généralement cylindrique pourvu d'un canal à travers lui, chaque extrémité dudit corps de raccordement (120) comportant un filetage en vue d'un couplage par vissage avec un élément tubulaire (132, 134) de telle sorte que l'ensemble de raccordement puisse fournir un raccordement entre deux éléments tubulaires (132, 134), l'anneau de protection comportant un corps d'anneau (140) destiné à être positionné de façon adjacente à une paroi intérieure (126) dudit corps de raccordement (120) entre ses deux extrémités et placé en vue d'être en contact avec lesdits deux éléments tubulaires (132, 134), ledit corps d'anneau (140) étant généralement cylindrique et présentant un canal d'anneau à travers lui, ledit anneau de protection comportant une pluralité d'éléments d'activation (142a, 142b, 142c), chaque élément d'activation de la pluralité des éléments d'activation (142a, 142b, 142c) comprenant un matériau présentant une certaine dureté,
**caractérisé en ce que** la dureté d'au moins un élément d'activation (142a, 144c) est moins grande que la dureté d'au moins un autre élément d'activation (142b), l'agencement étant tel, qu'en fonctionnement, lors de la compression dudit anneau de protection entre les deux dits éléments tubulaires, ledit élément d'activation presse ledit corps d'anneau (140) contre ladite paroi intérieure (126) dudit corps de raccordement (120) de sorte qu'un matériau corrosif acheminé par les éléments tubulaires (132, 134) est empêché de se trouver en contact avec ledit corps de raccordement (120).

2. Anneau de protection selon la revendication 1, dans lequel au moins l'un desdits éléments d'activation (142a, 142b, 142c) s'étend autour dudit corps d'anneau (140) et est essentiellement coaxial avec celui-ci, de sorte que ledit corps d'anneau (140) est empêché de se déformer en arc vers l'intérieur pendant une compression entre lesdits deux éléments tubulaires (132, 134).

3. Anneau de protection selon la revendication 1 ou 2, comprenant, de plus, une ouverture (144a, 144b, 144c) dans ledit corps d'anneau (140), l'agencement étant tel que, en fonctionnement, sous le fait d'une compression entre les deux dits éléments tubulaires (132, 134), ladite ouverture (144a, 144b, 144c) commence à se fermer facilitant un changement de la configuration dudit corps d'anneau (140) sans en modifier essentiellement son volume.

4. Anneau de protection selon la revendication 3, dans lequel ladite au moins une ouverture (144a, 144b, 144c) est d'une dimension suffisante pour que, en fonctionnement, sous le fait d'une compression entre les deux dits éléments tubulaires (132, 134) ledit corps d'anneau (140) est empêché de se dilater de façon significative dans un parcours d'écoulement défini par ledit ensemble de raccordement et les deux dits éléments tubulaires.

5. Anneau de protection selon la revendication 2 ou 3, dans lequel ladite ouverture (144a, 144b, 144c) est associée au dit au moins un élément desdits éléments d'activation (142a, 142b, 142c).

6. Anneau de protection selon la revendication 2, 3, 4 ou 5, comportant, de plus, une pluralité d'ouvertures (144a, 144b, 144c), chaque ouverture correspondant à un élément d'activation respectif (142a, 142b, 142c).

7. Anneau de protection selon la revendication 6, dans lequel au moins une ouverture de ladite pluralité des ouvertures (144a, 144b, 144c) se trouve sur une partie extérieure dudit corps d'anneau (140) et au moins une ouverture de ladite pluralité des ouvertures (144a, 144b, 144c) se trouve sur une partie intérieure dudit corps d'anneau (140).

8. Anneau de protection selon l'une quelconque des revendications 2 à 7, dans lequel ladite ouverture (144a, 144b, 144c) est dimensionnée en vue de supporter des tolérances de fabrication en longueur des deux dits éléments tubulaires (132, 134) lorsque ledit anneau de protection est comprimé entre eux.

9. Anneau de protection selon l'une quelconque des revendication précédentes, dans lequel la pluralité des éléments d'activation (142a, 142b, 142c) comporte deux éléments d'activation (142a, 142c) de la même dureté et un élément d'activation (142b) constitué d'un matériau plus dur que le matériau des deux éléments d'activation (142a, 142c).

10. Anneau de protection selon l'une quelconque des revendications précédentes, dans lequel le, au moins un, élément d'activation (142a, 142b, 142c) comporte un matériau élastomère résilient.

11. Anneau de protection selon l'une quelconque des revendications précédentes, dans lequel ledit corps d'anneau (140) comprend un matériau anti-corrosif compressible.

12. Anneau de protection selon l'une quelconque des revendications précédentes, dans lequel l'anneau de protection comporte au moins une surface concave (206, 321-325, 604) s'étendant autour d'au moins une partie de la circonférence dudit corps d'anneau.

13. Ensemble de raccordement permettant de coupler ensemble deux éléments tubulaires, lequel ensemble de raccordement comprend
un corps de raccordement (120) de configuration généralement cylindrique doté d'un canal à travers lui , chaque extrémité dudit corps de raccordement (120) présentant un filetage (254) pour un couplage par vissage avec un élément tubulaire (132, 134) de telle sorte que l'ensemble de raccordement puisse fournir une connexion entre deux éléments tubulaires (132, 134), et un anneau de protection selon l'une quelconque des revendications 1 à 12.

14. Ensemble de raccordement selon la revendication 13, dans lequel les deux éléments tubulaires (132, 134) présentent chacun une partie conique, le corps de raccordement (120) étant adapté pour recevoir les parties coniques.

15. Procédé permettant de raccorder ensemble deux éléments tubulaires en utilisant un ensemble de raccordement selon la revendication 13 ou 14, lequel procédé comporte les étapes comprenant le fait de :
(1) engager par vissage chaque élément tubulaire (132, 134) avec le corps de raccordement (120) de l'ensemble de raccordement ; et
(2) comprimer l'anneau de protection entre les deux dits éléments tubulaires (132, 134) de telle façon que ledit anneau de protection soit pressé contre une paroi intérieure (126) du corps de raccordement (120), dans lequel ledit au moins un élément d'activation d'une dureté inférieure (142a, 142c) commence à changer de forme sous le fait de la compression avant ledit, au moins un, autre élément d'activation (142b).
